# EUROPEAN PATENT APPLICATION

(11) **EP 3 974 182 A1**
(43) Date of publication of application: **30.03.2022**
(21) Application number: 20198638.7
(22) Date of filing: 28.09.2020
(51) Int. Cl.: B32B 17/10, B32B 27/22

(54) **MULTILAYER SOUND DAMPENING INTERLAYER FILMS COMPRISING ETHYLENE VINYL ACETALS**

(71) Applicant: Kuraray Europe GmbH, 65795 Hattersheim (DE)
(72) Inventor: Beekhuizen, Jan Arndt, 53859 Niederkassel (DE); Becker, Greta, 55122 Mainz (DE); Haerth, Michael, 53859 Niederkassel (DE); Janßen, Christian, 65795 Hattersheim am Main (DE)
(74) Representative: Janßen, Christian Oliver

(57) **Abstract**

The invention is directed to multilayer sound dampening interlayer films comprising ethylene vinyl acetals.

## Description

The invention is directed to multilayer sound dampening interlayer films comprising ethylene vinyl acetals.

Laminated safety glass (LSG) generally consists of two glass panels and an intermediate film, which bonds the glass panels together. Plasticizer-containing, partially acetalized polyvinyl alcohol, in particular polyvinyl butyral (PVB) is predominantly used as a film material. LSG is used for example as windshields or side windows in the automotive sector and as safety glass in the construction sector.

A feature of laminated glass that becomes more and more important is its sound-damping characteristics. This can be achieved for example by a monolayer film that is particularly soft and hence sound-absorbing. However, the mechanical stability of these films is often insufficient and they do not exhibit adequate adhesion to glass.

Alternatively, multilayer systems can be used in which the individual layers differ with respect to their mechanical strengths, and thus sound absorption is achieved by mechanical decoupling. Such multilayer systems comprising PVB are described for example in US 2010028642 A1.

However, there is still a need in the industry for improved sound dampening interlayers.

Therefore, one objective of the present invention was to provide interlayers with improved sound dampening characteristics, improved mechanical stability, improved environmental footprint, improved thermal stability, improved water uptake profile, improved processibility in film making or improved production or raw material costs.

These and other objectives are surprisingly solved by the present invention.

In a first aspect, the present invention concerns a sound dampening interlayer film for laminated glass comprising at least two individual films, wherein at least one of the individual films comprises an ethylene vinyl acetal.

Preferably, the sound dampening interlayer film comprises an ethylene vinyl acetal with ethylene units in the range of 25 to 60 mol%. More preferably, the percentage of ethylene units in the ethylene vinyl acetal 30 to 55 mol%, and still more preferably 35 to 50 mol%.

Preferably, the percentage of ethylene units in the ethylene vinyl alcohol is 25 to 60 mol%, more preferably 30 to 55 mol%, and still more preferably 35 to 50 mol%.

Also preferably, the sound dampening interlayer film comprises at least three individual films wherein a first individual film (A) and a third individual film (C) constitute the outer layers and a second individual film (B) constitutes the inner layer.

Also preferably, the first individual film (A) and the third individual film (C) comprise an ethylene vinyl acetal, more preferably, the first individual film (A), the second individual film (B) and the third individual film (C) comprise an ethylene vinyl acetal.

Thus, this embodiment of the present invention is related to a multilayer film that comprises two outer layers comprising ethylene vinyl acetal facing towards the glass when used as an interlayer for laminated safety glass, and at least one inner layer. The inner layer is usually chosen to be softer than the two out layers and is often referred to as the sound dampening layer. In case all individual films comprise ethylene vinyl acetals, the ethylene vinyl acetals are usually of different grades, e.g. differ in the amount of ethylene units in the polymer chain, the degree of acetalization and/or the degree of saponification.

Preferably, the ethylene vinyl alcohol is obtained by copolymerizing ethylene and a vinyl acetate and hydrolysing the obtained copolymer. In the hydrolysation reaction, a conventionally known alkali catalyst or an acid catalyst can be used and among them, a hydrolysation reaction using methanol as a solvent and caustic soda (NaOH) catalyst is convenient.

Although there is no particular limitation to the method for producing the ethylene vinyl acetals used in this embodiment of the present invention, they can be produced by a method in which an aldehyde is added to the ethylene vinyl alcohol solution under acidic conditions and subjected to the acetalization reaction.

The reaction product obtained after the acetalization reaction is neutralized with alkali, and then washed with water to obtain the ethylene vinyl acetal.

The catalyst for carrying out the acetalization reaction is not particularly limited, and any organic acid or inorganic acid may be used. Examples thereof include acetic acid, para toluenesulfonic acid, nitric acid, sulfuric acid, hydrochloric acid, carbonic acid, and the like.

Although there is no particular limitation on the degree of saponification of the acetate groups, it is preferably 95 mol% or more, more preferably 98 mol% or more, still more preferably 99 mol% or more, and most preferably 99.9 mol% or more.

Preferably, the percentage of vinyl alcohol units in the ethylene vinyl acetal resin of the present invention is 20 to 71 mol% based on the total monomer units constituting the resin.

Preferably, the degree of acetalization of the ethylene vinyl acetal used in the present invention is from 1 mol% to 80mol%, also preferably 5 mol% or more and less than 70 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde or n-butyraldehyde.

Also preferably, the ethylene vinyl acetals are mixed acetals, i.e. they comprise at least two different acetal groups. In other words, the ethylene vinyl acetals as used in the invention comprise a first acetal group derived from the reaction of two hydroxyl groups of the respective ethylene vinyl alcohol with one aldehyde and at least a second acetal group derived from the reaction of two other hydroxyl groups of the respective ethylene vinyl alcohol with a second aldehyde, wherein the first aldehyde is different from the second aldehyde. The preferred aldehydes are the same as used for the acetals with one acetal group as listed above.

Preferably, the ethylene vinyl acetals used in the inventive process have a glass transition temperature (Tg) of equal to or higher than 30, 35, 40, 45, or 50ºC. Also preferably, they have a Tg of 90, 75, 70, 65, 60, 55 ºC. More preferably, the ethylene vinyl acetals used in the inventive process have a Tg of 30 to 90 ºC, most preferably 35 to 75 ºC, and specifically 40 to 55 ºC.

The glass transition temperature is determined by means of differential scanning calorimetry (DSC) in accordance with DIN 53765 using a heating rate of 10K/min at a temperature interval of minus 50 °C to 150 °C. A first heating ramp, followed by a cooling ramp, followed by a second heating ramp was used. The position of the glass transition temperature was established on the measurement curve associated with the second heating ramp in accordance with DIN 51007. The DIN midpoint (Tg DIN) was defined as the point of intersection of a horizontal line at half step height with the measurement curve. The step height was defined by the vertical distance of the two points of intersection of the middle tangent with the base lines of the measurement curve before and after glass transition.

The melting point (melt temperature, Tm) is determined by means of differential scanning calorimetry (DSC) in accordance with ISO 11357-3:2018.

The vinyl alcohol content and vinyl acetate content of ethylene vinyl acetals were determined in accordance with DIN ISO 3681 (Acetate content) and DIN ISO 53240 (PVA content). The vinyl acetal content can be calculated as the remaining portion from the sum of vinyl alcohol content and vinyl acetate content determined in accordance with DIN ISO 53401/53240 and the ethylene needed to make one hundred. The degree of acetalisation can be calculated from the amount of vinyl acetal content divided by the sum of vinyl alcohol content, vinyl acetal content and vinyl acetate content. Conversion from % by weight into mol % is achieved by formulas known to the person skilled in the art.

The ethylene content of the ethylene vinyl acetate copolymer is measured by NMR spectroscopy. First, the ethylene vinyl acetal resin is dissolved in ethanol and a 2 N hydrochloride hydroxylamine solution and hydrochloric acid are added, and the mixture is stirred under reflux with a condenser in a water bath for 4 hours, and after cooling, ammonia water is added. Afterwards, methanol is added and the polymer is precipitated, washed and dried to obtain the acetylated ethylene vinyl alcohol copolymer. Then, the acetylated ethylene vinyl alcohol copolymer is dissolved in DMSO (dimethyl sulfoxide) at 120 °C, cooled to room temperature, and then N,N-dimethyl-4-aminopyridine and acetic anhydride are added thereto, followed by stirring for 1 h, followed by precipitation with ion-exchanged water and acetone, and drying to obtain an ethylene vinyl acetate copolymer. The polymer is dissolved in DMSO-d6 and measured by a proton NMR spectrometer of 400 MHz. The spectrum obtained was integrated 256 times. The molar ratio of the ethylene unist of the ethylene vinyl alcohol copolymer is calculated from the intensity ratio of the methine proton (peak at 1.1 to 1.9 ppm) derived from the ethylene unit and the vinyl acetate unit, and the terminal methyl proton (peak at 2.0 ppm) derived from the vinyl acetate unit. Note that, since the ethylene unit is not affected by the acetalization reaction, the molar ratio (n) of the ethylene unit of the ethylene vinyl alcohol copolymer before the acetalization reaction is equal to the molar ratio (n) of the ethylene unit of the modified vinyl acetal resin obtained after the acetalization reaction.

The interlayer film according to the present invention can also comprise other polymers different from the ethylene vinyl acetals described above. It can comprise one or more other ethylene vinyl acetal grades, differing in hydroxyl content, ethylene content and/or degree of polymerization and/or degree of acetate content and/or type of acetal. Alternatively, it can also comprise any polymer selected from the group consisting of polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), wood filled composites, metal filled composites, carbon fibre filled composites, thermoplastic elastomers (TPE), thermoplastic polyurethanes (TPU), polyolefins, polypropylenes (PP), acrylonitrile styrene acrylate (ASA), polyacrylates, polymethacrylates, ionomers, polyvinyl acetals like polyvinyl butyrals and mixtures thereof.

Preferably, the first individual film (A) and the third individual film (C) comprise an ethylene vinyl acetal and the second individual film (B) comprises a thermoplastic elastomer.

Thermoplastic elastomers generally include materials with soft and hard segments, such as a polystyrene-based elastomer (soft segment: polybutadiene, polyi soprene/hard segment: polystyrene), a polyolefin-based elastomer (soft segment: ethylene propylene rubber/hard segment: polypropylene), a polyvinyl chloride-based elastomer (soft segment: polyvinyl chloride/hard segment: polyvinyl chloride), a polyurethane-based elastomer (soft segment: polyether, polyester, or polycarbonate/hard segment: polyurethane), a polyester-based elastomer (soft segment: aliphatic polyester/hard segment: aromatic polyester), a polyether ester-based elastomer (soft segment: polyether/hard segment: polyester), a polyamide-based elastomer (soft segment: polypropylene glycol, polytetramethylene ether glycol, polyester, or polyether/hard segment: polyamide (such as a nylon resin)), a polybutadiene-based elastomer (soft segment: amorphous butyl rubber/hard segment: syndiotactic 1,2-polybutadiene resin), an acrylic elastomer (soft segment: poly acrylate ester/hard segment: polymethyl methacrylate). It is to be noted that the above-described thermoplastic elastomers may be used solely or may be used in combination of two or more thereof.

A content of the hard segment in the thermoplastic elastomer is preferably about 5% by mass or more, or about 7% by mass or more, or about 8% by mass or more, or about 10% by mass or more, or about 14% by mass or more, or about 16% by mass or more, or about 18% by mass or more, relative to the total amount of the thermoplastic elastomer. A content of the hard segment is preferably about 40% by mass or less, or about 30% by mass or less, or about 20% by mass or less, relative to the total amount of the thermoplastic elastomer. When the content of the hard segment is less than about 5% by mass, there is a tendency for the molding of the layer B to be difficult, the height of the peak of tan d is small, the flexural rigidity of the laminate is small, or the sound insulating properties in a high-frequency region is lowered. When the content of the hard segment is more than about 40% by mass, there is a tendency for the characteristics of the thermoplastic elastomer to be hardly exhibited, the stability of sound insulating performance is lowered, or the sound insulating characteristics in the vicinity of room temperature are lowered.

A content of the soft segment in the thermoplastic elastomer is preferably about 60% by mass or more, or about 70% by mass or more, or about 80% by mass or more, relative to the total amount of the thermoplastic elastomer. The content of the soft segment is preferably about 95% by mass or less, or about 92% by mass or less, or about 90% by mass or less, or about 88% by mass or less, or about 86% by mass or less, or about 84% by mass or less, or about 82% by mass or less relative to the total amount of the thermoplastic elastomer. When the content of the soft segment is less than about 60% by mass, the characteristics of the thermoplastic elastomer tend to be hardly exhibited. When the content of the soft segment is more than about 95% by mass, there is a tendency that the molding of the layer B is difficult, the height of the peak of tan d is small, the flexural rigidity of the laminate is small, or the sound insulating properties in a high-frequency region are lowered. Here, in the case where a plurality of the thermoplastic elastomers is mixed, the contents of the hard segment and the soft segment in the thermoplastic elastomer are each considered as an average value of the mixture.

From the viewpoint of making both the moldability and the sound insulating properties compatible with each other, it is more preferred to use a block copolymer having a hard segment and a soft segment as the thermoplastic elastomer. Furthermore, from the viewpoint of further improving the sound insulating properties, it is preferred to use a polystyrene-based elastomer.

In addition, crosslinked rubbers of natural rubber, isoprene rubber, butadiene rubber, chloroprene rubber, nitrile rubber, butyl rubber, ethylene propylene rubber, urethane rubber, silicone rubber, chlorosulfonated polyethylene rubber, acrylic rubber, fluorine rubber, and the like may be used as the thermoplastic elastomer.

The thermoplastic elastomer is preferably a copolymer of an aromatic vinyl monomer and a vinyl monomer or a conjugated diene monomer, or a hydrogenated product of the copolymer. From the viewpoint of making both the function as a rubber exhibiting sound insulating properties and the function as a plastic compatible with each other, the copolymer is preferably a block copolymer having an aromatic vinyl polymer block and an aliphatic unsaturated hydrocarbon polymer block, for example, a polystyrene-based elastomer.

In the case where a copolymer having an aromatic vinyl polymer block and a vinyl polymer block or a conjugated diene polymer block, for example, a block copolymer having an aromatic vinyl polymer block and an aliphatic unsaturated hydrocarbon polymer block is used as the thermoplastic elastomer, the binding form of these polymer blocks is not particularly limited, and it may be any of a linear binding form, a branched binding form, a radial binding form, and a combined binding form of two or more thereof. Of those, a linear binding form is preferred.

When the aromatic vinyl polymer block is expressed as "a", and the aliphatic unsaturated hydrocarbon polymer block is expressed as "b", examples of the linear binding form include a diblock copolymer expressed by a-b, a triblock copolymer expressed by a-b-a or b-a-b, a tetrablock copolymer expressed by a-b-a-b, a pentablock copolymer expressed by a-b-a-b-a or b-a-b-a-b, an (a-b)nX type copolymer (X represents a coupling residual group, and n represents an integer of 2 or more), and a mixture thereof. Of those, a diblock copolymer or a triblock copolymer is preferred, and the triblock copolymer is more preferably a triblock copolymer expressed by a-b-a.

Examples of the aliphatic unsaturated hydrocarbon monomer constituting the aliphatic unsaturated hydrocarbon polymer block include ethylene, propylene, 1 - butene, 1-pentene, 1 -hexene, 1 -heptene, 1-octene, 1-nonene, 1-decene, 4-phenyl-1 -butene, 6-phenyl- 1-hexene, 3 -methyl- 1 -butene, 4-methyl- 1 -butene, 3-methyl- 1 -pentene, 4-methyl- 1 -pentene, 3 -methyl- 1 -hexene, 4-methyl - 1 -hexene, 5-methyl- 1 -hexene, 3 ,3 -dimethyl- 1 -pentene, 3 ,4-dimethyl- 1 -pentene, 4,4-dimethyl- 1 -pentene, vinylcyclohexane, hexafluoropropene, tetrafluoroethylene, 2-fluoropropene, fluoroethylene, 1 , 1 -difluoroethylene, 3-fluoropropene, trifluoroethylene, 3 ,4-dichloro- 1 -butene, butadiene, isoprene, dicyclopentadiene, norbomene, acetylene, and the like. These aliphatic unsaturated hydrocarbon monomers may be used solely or may be used in combination of two or more thereof.

Though a production method of the block copolymer is not particularly limited, the block copolymer can be, for example, produced by an anionic polymerization method, a cationic polymerization method, a radical polymerization method, or the like. For example, in the case of anionic polymerization, specific examples thereof include:
(i) a method of successively polymerizing an aromatic vinyl monomer, a conjugated diene monomer, and subsequently an aromatic vinyl monomer by using an alkyllithium compound as an initiator;
(ii) a method of successively polymerizing an aromatic vinyl monomer and a conjugated diene monomer by using an alkyllithium compound as an initiator and subsequently adding a coupling agent to undergo coupling;
(iii) a method of successively polymerizing a conjugated diene monomer and subsequently an aromatic vinyl monomer by using a dilithium compound as an initiator.

Specific examples of suitable thermoplastic elastomers can be found, for example, by reference to US2010239802A1.

In one preferred embodiment, the thermoplastic elastomer is a hydrogenated block copolymer formed by hydrogenating a block copolymer comprising at least a polymer block
(A) constituted predominantly from an aromatic vinyl compound unit and a polymer block
(B) constituted predominantly from a 1,3 -butadiene unit or constituted predominantly from an isoprene unit and a 1,3-butadiene unit, wherein a content of the polymer block (A) is from about 5% to about 40% mass on the basis of a total amount of the hydrogenated block copolymer, wherein the polymer block (B) has a hydrogenation rate of about 70% or more, and wherein the hydrogenated block copolymer has a glass transition temperature of from about -45°C to about 30°C.

In another preferred embodiment, the thermoplastic elastomer is a hydrogenated block copolymer formed by hydrogenating a block copolymer comprising at least a polymer block (C) constituted predominantly from an aromatic vinyl compound unit and a polymer block (D) constituted predominantly from a 1,3 -butadiene unit or constituted predominantly from an isoprene unit and a 1,3 -butadiene unit, wherein a content of the polymer block (C) is from about 10% to about 40% mass on the basis of a total amount of the hydrogenated block copolymer, wherein the polymer block (D) has a hydrogenation rate of about 80% or more, and wherein the hydrogenated block copolymer has a glass transition temperature of less than about -45°C.

In the above two preferred embodiments, desirably the aromatic vinyl compound is styrene, and/or the polymer block (B) and (D) are constituted predominantly from an isoprene unit and a 1,3 -butadiene unit, and/or the hydrogenated block copolymer is a tri-block copolymer having an A1-B-A2 or C1-D-C2 type structure.

In another embodiment according to the present invention, the first individual film (A) and the third individual film (C) comprise an ethylene vinyl acetal and the second individual film (B) comprises a polyvinyl acetal.

Preferably, individual film (B) is based on polyvinyl butyral (PVB) obtained by acetalizing polyvinyl alcohol with butyraldehyde although other aldehydes as listed above can also be advantageously used.

Preferably, individual film (B) comprises polyvinyl acetal with a portion of polyvinyl acetate groups between 5 and 8 mol %.

Preferably, individual film (B) comprises polyvinyl acetal with a portion of polyvinyl alcohol groups of less than 18 % by weight, more preferably less than 14% by weight, most preferably 11-13.5% by weight and specifically less 11.5-13% by weight.

Specific examples of suitable polyvinyl acetals can be found, for example, by reference to US 2010028642 A1.

In another preferred embodiment, the second individual film (B) comprises an ethylene vinyl acetal. Thus, the ethylene vinyl acetal is the softer core material supplemented by two harder outer films.

Preferably, the first individual film (A) and the third individual film (C) comprise a polyvinyl acetal.

Suitably, the polyvinyl acetal has a portion of polyvinyl acetate groups of 0.1 to 11 mol %, preferably 0.1 to 4 mol %, more preferably 0.1 to 2 mol %.

Also suitably, the polyvinyl acetal has a portion of polyvinyl alcohol groups of 17 to 22 % by weight, preferably 18 to 21% by weight and more preferably 19.0 to 20.5 % by weight.

Specific examples of suitable polyvinyl acetals can be found, for example, by reference to US 2010028642 A1.

In another preferred embodiment of the present invention, the first individual film (A) and the third individual film (C) comprise a ionomer.

The ionomer resin is a partially-neutralized ethylene a,b-unsaturated carboxylic acid copolymer, which includes resins having constituent units derived from ethylene, constituent units derived from an a,b-unsaturated carboxylic acid and optionally other constituent units as described below, in which at least a part of the constituent units derived from the a,b-unsaturated carboxylic acid are neutralized with an ion.

In the ethylene a,b-unsaturated carboxylic acid copolymer serving as a base polymer, a content proportion of the constituent units derived from an a,b-unsaturated carboxylic acid is typically 2% by mass or more, or 5 % by mass or more (based on total copolymer mass). In addition, the content proportion of the constituent units derived from an a,b-unsaturated carboxylic acid is typically 30% by mass or less (based on total copolymer mass).

Examples of the a,b-unsaturated carboxylic acid constituting the ionomer include, without limitation, acrylic acid, methacrylic acid, itaconic acid, maleic acid, fumaric acid, and mixtures of two or more thereof. In one embodiment, the a^-ethylenically unsaturated carboxylic acid is selected from acrylic acid, methacrylic acid, and mixtures thereof. In another embodiment, the a,B-ethylenically unsaturated carboxylic acid is methacrylic acid.

The ethylene acid copolymer may further comprise copolymerized units of one or more additional comonomer(s), such as an a,b-ethylenically unsaturated carboxylic acid ester. When present, alkyl esters having 3 to 10, or 3 to 8 carbons, are typically used. Specific examples of suitable esters of unsaturated carboxylic acids include, without limitation, methyl acrylate, methyl methacrylate, ethyl acrylate, ethyl methacrylate, propyl acrylate, propyl methacrylate, isopropyl acrylate, isopropyl methacrylate, n-butyl acrylate, n-butyl methacrylate, isobutyl acrylate, isobutyl methacrylate, tert-butyl acrylate, tert-butyl methacrylate, octyl acrylate, octyl methacrylate, undecyl acrylate, undecyl methacrylate, octadecyl acrylate, octadecyl methacrylate, dodecyl acrylate, dodecyl methacrylate, 2-ethylhexyl acrylate, 2-ethyl hexyl m ethacry 1 ate, isobomyl acrylate, isobornyl methacrylate, lauryl acrylate, lauryl methacrylate, 2- hydroxy ethyl acrylate, 2-hydroxy ethyl methacrylate, glycidyl acrylate, glycidyl methacrylate, dimethyl maleate, diethyl maleate, dibutyl maleate, dimethyl fumarate, diethyl fumarate, dibutyl fumarate, dimethyl fumarate, vinyl acetate, vinyl propionate, and mixtures of two or more thereof. In one embodiment, the additional comonomers are selected from methyl acrylate, methyl methacrylate, n-butyl acrylate, n-butyl methacrylate, isobutyl acrylate, isobutyl methacrylate, glycidyl methacrylate, vinyl acetate, and mixtures of two or more thereof. In another embodiment, the additional comonomer is one or more of n-butyl acrylate, n-butyl methacrylate, isobutyl acrylate and isobutyl methacrylate. In another embodiment, the additional comonomer is one or both of n-butyl acrylate and isobutyl acrylate.

Suitable ethylene acid copolymers have a melt flow rate (MFR) of from about 1, or from about 2, to about 4000 g/10 min, or to 1000 g/10 min, or to about 400 g/10 min, as determined in accordance with ASTM method D1238-89 at 190°C and 2.16 kg.

Finally, suitable ethylene acid copolymers may be synthesized as described, for example, in US3404134, US5028674, US6500888B2, US6518365B1, US8334033B2 and US8399096B2.

To obtain the ionomers, the ethylene acid copolymers are partially neutralized by reaction with one or more bases. An example of a suitable procedure for neutralizing the ethylene acid copolymers is described in US3404134 and US 6518365B1. After neutralization, about 1%, or about 10%, or about 15%, or about 20%, to about 90%, or to about 60%, or to about 55%, or to about 30%, of the hydrogen atoms of carboxylic acid groups present in the ethylene acid copolymer are replaced by other cations. Stated alternatively, about 1%, or about 10%, or about 15%, or about 20%, to about 90%, or to about 60%, or to about 55%, or to about 30%, of the total content of the carboxylic acid groups present in the ethylene acid copolymer are neutralized. In another alternative expression, the acid groups are neutralized to a level of about 1%, or about 10%, or about 15%, or about 20%, to about 90%, or to about 60%, or to about 55%, or to about 30%, based on the total content of carboxylic acid groups present in the ethylene acid copolymers as calculated or measured for the non-neutralized ethylene acid copolymers. The neutralization level can be tailored for the specific end-use.

The ionomers comprise cations as counterions to the carboxylate anions. Suitable cations include any positively charged species that is stable under the conditions in which the ionomer composition is synthesized, processed and used. Suitable cations may be used in combinations of two or more. In some preferred ionomers, the cations are metal cations, which may be monovalent, divalent, bivalent, or multivalent. Useful monovalent metal cations include but are not limited to cations of sodium, potassium, lithium, silver, mercury, copper, and the like. Useful divalent metal cations include but are not limited to cations of beryllium, magnesium, calcium, strontium, barium, copper, cadmium, mercury, tin, lead, iron, cobalt, nickel, zinc, and the like. Useful trivalent metal cations include but are not limited to cations of aluminum, scandium, iron, yttrium, and the like. Useful multivalent metal cations include but are not limited to cations of titanium, zirconium, hafnium, vanadium, tantalum, tungsten, chromium, cerium, iron, and the like. When the metal cation is multivalent, complexing agents such as stearate, oleate, salicylate, and phenolate radicals may be included, as described in US3404134. In another preferred composition, the metal cations used are monovalent or divalent metal cations. Preferred metal cations are sodium, lithium, magnesium, zinc, potassium, and combinations of one or more of these metal cations. In a more preferred composition, the cations are sodium cations, magnesium cations, zinc cations and combinations thereof.

In one embodiment, the counterions to the carboxylate anions in the ionomer are sodium cations, with counterions other than sodium cations be optionally present in small amounts of less than 5 equivalent %, or less than 3 equivalent %, or less than 2 equivalent %, or less than 1 equivalent %, based on the total equivalents of carboxylate groups in the ionomer. In one embodiment, the counterions are substantially sodium ions.

Preferably, at least one of the individual films (A), (B) or (C) are wedge-shaped. More preferably, all individual films (A), (B) and (C) are wedge-shaped.

Thus, the present invention relates to a partially- or fully-wedge-shaped interlayer film based on the combination of wedge and non-wedge individual films or on all individual films having a wedge shape. Wedge-shaped interlayer films are commonly used in vehicles equipped with a head-up display to avoid a double image.

Preferably, at least one of the individual films (A), (B) and (C) comprise a plasticizer in amount of 10 to 50 % by weight. Thus, the individual films comprises, other than the polymer material, up to 50% by weight (based on the total weight of the composition) of one or more plasticizers. Any compound known to plasticize the corresponding polymer may be used. Preferred plasticisers are diesters of aliphatic diols, in particular of aliphatic polyether diols and/or polyether polyols with aliphatic carboxylic acids, preferably diesters of polyalkylene oxides, in particular diesters of diethylene glycol, triethylene glycol and tetraethylene glycol with aliphatic (C6-C10) carboxylic acids, preferably 2-ethyl butyric acid and n-heptanoic acid, also diesters of aliphatic or aromatic (C2-C18) dicarboxylic acids, preferably adipine, sebacine and phthalic acid, with aliphatic (C4-C12) alcohols, preferably dihexyl adipate, phthalates, trimellitates, phosphates, fatty acid esters, in particular triethylene glycol-bis-(2-ethyl butyrate), triethylene glycol ethyl hexanoate (3G8), aromatic carboxylic acid esters, in particular dibenzoates and/or hydroxycarboxylic acid esters. It may contain a single plasticiser as well as mixtures of plasticisers both of different and identical composition. The term "different composition" refers to both the type of plasticiser and proportion thereof in the mixture. It may contain, in the starting state prior to lamination, at least 22 % by weight, such as 22.0 - 45.0 % by weight, preferably 25.0 - 32.0 % by weight and in particular 26.0 - 30.0 % by weight plasticiser.

Also optionally, the interlayer film according torn the present invention comprises other components than the ethylene vinyl acetals as described above. For example, it may contain antioxidants, optical brighteners, stabilisers, processing aids, organic or inorganic nanoparticles, pyrogenic silicic acid, silica, surface-active substances and/or rheological modifiers.

The damping characteristics are determined in accordance with ISO 16940 on a test piece consisting of an interlayer film having a thickness of 0.8 mm, which was laminated between two glass panels having a thickness of 2 mm. The first mode was determined each time and the corresponding loss-factor of the first mode.

The sound-absorbing effect of the films according to the invention should be highest at the application temperatures of the future glass laminate. With automotive glass, the application temperatures are at about 20 °C since the window is heated in winter and cooled by an air-conditioning unit in summer. In the test set-up mentioned above, films according to the invention preferably exhibit maximum damping in the temperature range of 15-25 °C. Preferably, the loss-factor values are greater than 0.1, more preferably greater than 0.15, and most preferably greater than 0.2.

There is no particular limitation on the method of manufacturing the interlayer film. Specifically, a starting resin composition may be formed into a film by extrusion, blow molding, injection molding, solution casting or the like, preferably by extrusion. The resin temperature at the time of extrusion is preferably 170 to 250 °C, more preferably 180 to 240 °C, and still more preferably 190 to 230 °C. If the resin temperature becomes too high, the ethylene vinyl acetal resin undergoes partial decomposition.

The individual films used according to the invention can each be used in almost any thickness provided that the sound insulation characteristics are not adversely altered. All individual films can for example have the same thickness; however, combinations of individual films of varying thickness are also possible. In one of the preferred arrangements of the interlayer film according to the invention as a triple-layer film A/B/C, the outer films A and C have largely the same thickness whereas the sound-absorbing film B can be as thin as possible. With a total thickness of the multilayer film of 0.8 mm, the sound-absorbing film may have a thickness of 0.05 to 0.35 mm. Multilayer films according to the invention preferably have the total thicknesses customary in industry of e.g. 0.38, 0.76, or 1.14 mm (i.e. multiples of 0.38 mm).

The interlayer films according to the invention have a certain roughness on at least one surface in order to prevent the interlayer films adhering to each other, e.g. when the film is wound up to a roll, and to enhance the degassing property in a laminating step. Conventional methods can be used to provide said roughness. Examples thereof include a method of providing a melt fracture structure by adjusting the extrusion conditions or embossing the surface. As for the depth and shape of the emboss, conventionally known ones may be used.

A further aspect of the present invention concerns the use of the inventive interlayer film as adhesive film for laminated glass.

The laminated glass can be produced by inserting and laminating the interlayer film of the present invention as well as the at least one film containing a polyvinyl acetal between two or more sheets of glass made of inorganic glass or organic glass. Although there is no particular limitation on the glass to be laminated with the interlayer film for laminated glass of the present invention, a conventionally known organic glass such as polymethyl methacrylate or polycarbonate can be used in addition to an inorganic glass such as float glass, reinforced glass, netted glass, or heat ray absorbing plate glass. Although there is no particular limitation on the thickness of the glass, it is preferably 1 to 10mm, more preferably 2 to 6mm. Laminating methods for obtaining the laminated glass described above are known in the art and examples thereof include a method using a vacuum laminator apparatus, a method using a vacuum bag, a method using a vacuum ring, and a method using a nip roll. Further, after temporary bonding, the method of throwing into the autoclaving step can also be performed additionally.

### Examples

For the purpose of this invention, different glass/glass laminates are produced, which comprise as interlayer the films according to the invention in the form of three combined individual films, films A and C being in direct contact with the glass surface and film B being positioned between films A and C. Tables 1 and 2 show the composition of the individual films.

**Table 1: Composition of different films according to this invention.**

| | Layer A | Layer B | Layer C |
|---|---|---|---|
| Example 1.1 | ACEV 1 | ACEV 2 | ACEV 1 |
| Example 1.2 | ACEV 1 | ACEV 2 | ACEV 1 |
| Example 2.1 | PVB 1 | ACEV 2 | PVB 1 |
| Example 2.2 | PVB 1 | ACEV 2 | PVB 1 |
| Example 3.1 | ACEV 1 | PVB 2 | ACEV 1 |
| Example 3.2 | ACEV 1 | PVB 2 | ACEV 1 |
| Example 4 | ACEV 1 | TPE 1 | ACEV 1 |
| Example 5.1 | lonomer 1 | ACEV 2 | lonomer 1 |
| Example 5.2 | lonomer 1 | ACEV 2 | lonomer 1 |

**Table 2: Thicknesses of each individual layer and total film thickness of interlayer films according to this invention.**

| | Layer A-thickness / mm | Layer B-thickness / mm | Layer C-thickness / mm | Total film thickness of 3-layer film / mm |
|---|---|---|---|---|
| Example 1.1 | 0.3 | 0.2 | 0.3 | 0.8 |
| Example 1.2 | 0.3 | 0.2 | 0.3 | 0.8 |
| Example 2.1 | 0.3 | 0.2 | 0.3 | 0.8 |
| Example 2.2 | 0.3 | 0.2 | 0.3 | 0.8 |
| Example 3.1 | 0.35 | 0.15 | 0.35 | 0.85 |
| Example 3.2 | 0.35 | 0.15 | 0.35 | 0.85 |
| Example 4 | 0.35 | 0.15 | 0.35 | 0.85 |
| Example 5.1 | 0.3 | 0.2 | 0.3 | 0.8 |
| Example 5.2 | 0.3 | 0.2 | 0.3 | 0.8 |

### Preparation of interlayer films according to this invention

Interlayer films according to this invention are made by film extrusion techniques that are known for people skilled in the art. To achieve a multilayer structure the individual layers A and C are extruded using a twin screw extruder 1 and individual layer B are extruded using a twin screw extruder 2. Depending on the Example (see table above) di-(2-butoxyethyl)-adipic acid (DBEA) in an amount as listed below is fed into the same extruders.

A feedblock is used that is placed before the melt of extruder 1 and extruder 2 is entering the extrusion die of a 34 cm width to combine the layers in a way that a trilayer film is formed where layers A and C having the same composition and layer B is contact with both layers A and C. The melt composing of a trilayer structure is then extruded onto a cooled chill roll to form the final interlayer film that is relaxed and winded over additional none-cooled rolls. The result of the individual examples is shown in table 2.

The recipe of Example 1.1 contains 15 weight percent of di-(2-butoxyethyl)-adipic acid ester (DBEA) added to extruder 2 based on the amount of the resin and 10 weight percent of di-(2-butoxyethyl)-adipic acid ester (DBEA) added to extruder 1 based on the amount of the resin.

The recipe of Example 1.2 contains 20 weight percent of di-(2-butoxyethyl)-adipic acid ester (DBEA) added to extruder 2 based on the amount of the resin and 10 weight percent of di-(2-butoxyethyl)-adipic acid ester (DBEA) added to extruder 1 based on the amount of the resin.

The recipe of Example 2.1 contains 27.5 weight percent of 3G8 added to extruder 1 based on the amount of the resin and 15 weight percent of di-(2-butoxyethyl)-adipic acid ester (DBEA) added to extruder 2 based on the amount of the resin.

The recipe of Example 2.2 contains 27.5 weight percent of 3G8 added to extruder 1 based on the amount of the resin and 20 weight percent of di-(2-butoxyethyl)-adipic acid ester (DBEA) added to extruder 2 based on the amount of the resin.

The recipe of Example 3.1 contains 37.5 weight percent of 3G8 added to extruder 2 based on the amount of the resin.

The recipe of Example 3.2 contains 37.5 weight percent of 3G8 added to extruder 2 based on the amount of the resin and 10 weight percent of di-(2-butoxyethyl)-adipic acid ester (DBEA) added to extruder 1 based on the amount of the resin.

The recipe of Example 5.1 contains 10 weight percent of di-(2-butoxyethyl)-adipic acid ester (DBEA) added to extruder 2 based on the amount of the resin.

The recipe of Example 5.2 contains 15 weight percent of di-(2-butoxyethyl)-adipic acid ester (DBEA) added to extruder 2 based on the amount of the resin.

### Materials used according to this invention

### Ethylene vinyl acetal of laver A and C (ACEV 1):

100 parts by weight of the ethylene vinyl alcohol copolymer containing 44 mol% of ethylene units (saponification degree: 99%) is synthesized according to the process described in Japanese Patent Application Laid-Open No. 2016-28139 are dispersed in 315 parts by weight of 1-propanol and the temperature of the solution is raised to 60° C with agitation. Afterwards, 40 parts by weight of 1M hydrochloric acid is added, followed by 16.7 parts by weight of n-butyraldehyde while maintaining the temperature at 60 °C. As the reaction proceed, the ethylene vinyl alcohol copolymer dissolves and the reaction mixture become a homogeneous solution. After 36 hours, 6.4 parts by weight of sodium hydrogen carbonate is added to stop the reaction. After adding 500 parts by weight of 1-propanol to the reaction solution to make it uniform, it is added dropwise to 2000 parts by weight of water to precipitate a resin. Thereafter, the operation of filtration and washing with water is repeated three times, the resulting solid is vacuum dried at 60 °C for 8 hours. The ethylene vinyl acetal thus obtained has a content of ethylene units of 44 mol% and an acetalization degree of 31 mol%.

### Ethylene vinyl acetal of laver B (ACEV 2):

100 parts by weight of the ethylene vinyl alcohol copolymer containing 48 mol% of ethylene units (saponification degree: 99%) is synthesized according to the process described in Japanese Patent Application Laid-Open No. 2016-28139 are dispersed in 315 parts by weight of 1-propanol and the temperature of the solution is raised to 60° C with agitation. Afterwards, 40 parts by weight of 1M hydrochloric acid is added, followed by 34.2 parts by weight of n-butyraldehyde while maintaining the temperature at 60 °C. As the reaction proceed, the ethylene vinyl alcohol copolymer dissolves and the reaction mixture become a homogeneous solution. After 36 hours, 6.4 parts by weight of sodium hydrogen carbonate is added to stop the reaction. After adding 500 parts by weight of 1-propanol to the reaction solution to make it uniform, it is added dropwise to 2000 parts by weight of water to precipitate a resin. Thereafter, the operation of filtration and washing with water is repeated three times, the resulting solid is vacuum dried at 60 °C for 8 hours.

### Polyvinyl butyral layer A (PVB 1):

100 parts by weight of polyvinyl alcohol Kuraray Poval^{™} 28-99 (commercial product of Kuraray Europe GmbH) was dissolved in 1075 parts by weight of water with heating to 90° C. At a temperature of 40° C., 57.9 parts by weight of n-butyraldehyde was added, and at a temperature of 12 °C. while stirring, 100 parts by weight of 20% hydrochloric acid was added. The mixture was heated to 71 °C. after the polyvinyl butyral (PVB) had precipitated and stirred at this temperature for 2 hours. The PVB was separated after cooling to room temperature, washed to neutrality with water, and dried. A PVB having a polyvinyl alcohol content of 19.0% by weight (27.5 mol %) and a polyvinyl acetate content of 1.3% by weight (1 mol %) was obtained.

### Polyvinyl butyral layer B (PVB 2):

100 parts by weight of polyvinyl alcohol Kuraray Poval^{™} 50-92 (commercial product of Kuraray Europe GmbH) with a degree of hydrolysis of 92.5 mol % and 68 parts by weight of n-butyraldehyde were used. A PVB having a polyvinyl alcohol content of 12.0 % by weight (18.3 mol %) and a polyvinyl acetate content of 9.6% by weight (7.5 mol %) was obtained.

### TPE 1:

A hydrogenated poly styrene-polyisoprene-poly styrene tri-block copolymer thermoplastic elastomer having a content of 1,2-bond and 3,4-bond of 75%. Hard block/soft block ratio [Mw(Al)/Mw (A2)] of 1.00, a glass transition temperature of - 15°C, a styrene content of 21% by mass, a hydrogenation rate of 84% and a weight-average molecular weight of 120,000. Commercially available as "HYBRAR^{™} H7125" from Kuraray Co., Ltd. (Tokyo, Japan).

### lonomer:

The ionomer used for interlayers under the trademark" SENTRY GLAS^{®} XTRA^{™}" and sold by Kuraray America, Inc. (Wilmington, DE, USA). The material is made from Cl2, as described in US20190030863 A1.

### Preparation of laminates

Test laminates in the dimension 30 x 30 cm are obtained by combining clear glass (Planilux^{®} 2.1 mm, cleaned with deionized water < 5 µS on a flat glass washing machine) with the interlayer film having layers A and B always facing to the glass.

The different sandwiches are passed through a commercial flat glass laminating nipper-line to produce pre-laminates. Lamination is accomplished by using an autoclave with standard conditions (90 min. comprising 30 min. hold time at 140 °C and 12 bar).

### Measurements:

In order to quantify the coupling and damping properties of the new interlayer according to the invention, the impedance test according ISO 16940 (as of 2008/12) is used on laminate beams of 25 x 300 mm, that are cut out of the laminates. Here, loss factor (LF) is directly related to damping whereas resonance frequency (f) is related to coupling via the bending stiffness which can be calculated from the resonance frequency. Due to redistribution of plasticizer between the different layers of multi-layer after a "heat shock" such as the typical autoclave step of safety glass lamination, evaluation of impedance properties is performed after 6 weeks of equilibration the laminates at precisely 20 °C.

## Claims

1. A sound dampening interlayer film for laminated glass comprising at least two individual films, wherein a first individual film (A) comprises an ethylene vinyl acetal.

2. The sound dampening interlayer film according to claim 1 wherein the ethylene vinyl acetal comprises ethylene units in the range of 25 to 60 mol%.

3. The sound dampening interlayer film according to claim 1 or 2 comprising at least three individual films wherein a first individual film (A) and a third individual film (C) constitute the outer layers and a second individual film (B) constitutes the inner layer.

4. The sound dampening interlayer film according to claim 3 wherein the first individual film (A) and the third individual film (C) comprise an ethylene vinyl acetal.

5. The sound dampening interlayer film according to claim 4 wherein the first individual film (A), the second individual film (B) and the third individual film (C) comprise an ethylene vinyl acetal.

6. The sound dampening interlayer film according to claim 3 wherein the first individual film (A) and the third individual film (C) comprise an ethylene vinyl acetal and the second individual film (B) comprises a thermoplastic elastomer.

7. The sound dampening interlayer film according to claim 3 wherein the first individual film (A) and the third individual film (C) comprise an ethylene vinyl acetal and the second individual film (B) comprises a polyvinyl acetal.

8. The sound dampening interlayer film according to claim 3 wherein the second individual film (B) comprises an ethylene vinyl acetal.

9. The sound dampening interlayer film according to claim 8 wherein the first individual film (A) and the third individual film (C) comprise a polyvinyl acetal.

10. The sound dampening interlayer film according to claim 3 wherein the first individual film (A) and the third individual film (C) comprise a ionomer.

11. The sound dampening interlayer film according to any one of claims 1 to 10 wherein at least one of the individual films (A), (B) or (C) are wedge-shaped.

12. The sound dampening interlayer film according to claim 11 wherein the individual films (A), (B) and (C) are wedge-shaped.

13. The sound dampening interlayer film according to any one of claims 1 to 12 wherein at least one of the individual films (A), (B) and (C) comprise a plasticizer in amount of 10 to 50 weight percent.

14. The sound dampening interlayer film according to any one of the claims 1 to 13 wherein the loss-factor value are greater than 0.1 when measured in accordance with ISO 16940 (as of 2008/12)

15. A laminated glass comprising two sheets of glass combined by the sound dampening interlayer according to any one of claims 1 to 14.
